# EUROPÄISCHE PATENTSCHRIFT

(11) **EP 1 061 696 B1**
(45) Veröffentlichungstag und Bekanntmachung des Hinweises auf die Patenterteilung: **20.04.2005**
(21) Anmeldenummer: 00112516.0
(22) Anmeldetag: 13.06.2000
(51) Int. Cl.: H04Q 11/04, H04L 12/56

(54) **ATM-Vermittlungseinrichtung mit einem Koppelnetz**
ATM switching device with a switching network
Dispositif de commutation ATM avec un réseau de commutation

(30) Priorität: 14.06.1999 DE 19926959
(43) Veröffentlichungstag der Anmeldung: 20.12.2000
(73) Patentinhaber: SIEMENS AKTIENGESELLSCHAFT, 80333 München (DE)
(72) Erfinder: Haferbeck, Ralf, 81829 München (DE); Schneeberger, Stefan, Dr., 85591 Vaterstetten (DE)

(56) Entgegenhaltungen:
- EP-A- 0 482 773
- EP-A- 0 858 240
- EP-A- 0 872 983
- US-A- 5 485 456

## Beschreibung

Die Erfindung betrifft eine ATM-Vermittlungseinrichtung mit einem Koppelnetz, einer eine Eingangs-Verarbeitungseinheit enthaltende Eingangs-Schnittstelleneinheit, zumindest einer eine Ausgangs-Schnittstelleneinheit enthaltende Ausgangs-Schnittstelleneinheit und mit einem Mikroprozessor, wobei die Vermittlungseinrichtung dazu eingerichtet ist, in die Zellen der einlangenden Datenströme unter Benutzung von Routingtabellen eine neue VPI/VCI-Information für den weiteren Verbindungsabschnitt einzuschreiben.

Die EP 0 858 240 A2 zeigt, dass eine Zellen-Zusammenstellund Multiplexing-Einheit Kurz-Zellen-Zusammenstellteile enthält, die eingehende Informationen speichern und Kurz-Zellen-Kopfzeilen (Headers) anfügt. Der Multiplexing-Teil dient zum Anordnen der Kurz-Zellen in gegebenen Feldern der Standard-Zellen, die ein gegebenes Standard-Format und eine feste Zellenlänge haben. Der Multiplexing-Teil dient außerdem zum Senden der Standard-Zellen mit den Kurz-Zellen über eine Transmissionsverbindung.

Die EP 0 482 773 A1 beschreibt ein Kommunikations-Kontroll-System, das ein ATM-Netz benutzt und eine kleine Anzahl von virtuellen Verbindungen aufweist. Feste oder teilweise feste virtuelle Verbindungen verbinden jede Benutzer-Schnittstelle und einen korrespondierenden Dienst-Prozessor. Ein Daten-Paket von einem Endgerät wird von der Benutzer-Schnittstelle in eine ATM-Zelle konvertiert und über die virtuelle Verbindung zum Dienst-Prozessor gesendet. Im Dienst-Prozessor wird die ATM-Zelle über die virtuelle Verbindung in der Richtung in welcher die Empfänger-Benutzer-Schnittstelle bereitgestellt ist, transportiert. Dabei wird die ATM-Zelle routinemäßig von der Empfänger-Benutzer-Schnittstelle ausgeführt.

ATM, die Kurzform für "Asynchronous Transfer Mode" ist eine Netzwerktechnologie, die zum Transport aller bekannten Signaldaten, wie reine Daten, Sprach- und Videodaten, etc., geeignet ist, wobei ATM beispielsweise das verbindungsorientierte Paketvermittlungsverfahren für B-ISDN (= Broadband Integrated Services Digital Network) ist. Charakteristisch für ATM ist die Strukturierung in Zellen gleicher Länge. Die zu vermittelnde Information wird auf ATM-Zellen aufgeteilt, die 53 Byte umfassen, nämlich, einen Zellenkopf (Header) mit 5 Byte und Nutzinformation (Payload) zu 48 Byte. Dabei identifiziert die Kopfinformation eine bestimmte virtuelle Verbindung und alle Zellen folgen dem dadurch festgelegten Übertragungsweg, der bei dem Aufbau der Verbindung durch virtuelle Verbindungen in einem Netz bestimmt wird.

Einen Überblick über ATM gibt beispielsweise ATM-Networks, Concepts, Protocols and Applications", von Händel, Huber und Schröder, Verlag Addison-Wesley-Longman, 2. Aufl. 1994 (ISBN 0-201-42274-3).

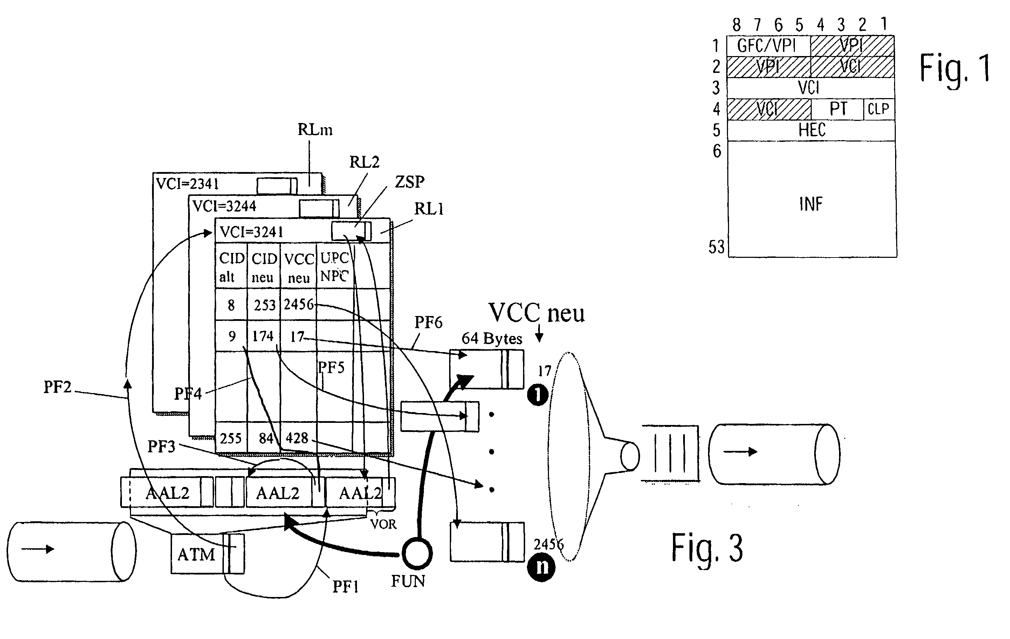

Im Gegensatz zu einem TDMA-Verfahren, bei welchem Zeitschlitze verschiedenen Typen von Datenverkehr im vorhinein zugeordnet sind, wird der bei einer ATM-Schnittstelle ankommende Datenverkehr in die erwähnten 53-Byte-Zellen segmentiert und diese Zellen werden sequentiell, so wie sie erzeugt wurden, weitergesandt. Die Führung der Zellen durch ein Netz erfolgt unter Benutzung der im Zellkopf gespeicherten Routing-Information und diesbezüglich wird auf Fig. 1 verwiesen, welche den beispielsweisen Aufbau des Feldes einer ATM-Zelle zeigt. Die ersten 4 Bit enthalten im Falle eines User Network Interface UNI die sogenannte Generic Flow Control GFC oder, im Falle eines Network Node Interface NNI einen Virtual Path Identifier VPI. Darauf folgen weitere 4 Bit VPI in der ersten Zeile, nochmals 4 Bit in der nächsten Zeile und daraufhin insgesamt 2 Byte Virtual Channel Identifier VCI. In dem vierten Byte )oder der vierten Zeile) folgen auf die VCI-Information noch drei Bit Information bezüglich der Pay Load Type PT und ein Bit Information bezüglich Cell Loss Priority CLP, und das letzte Byte des Kopfes enthält die Header Error Control HEC. Auf den Header folgen die erwähnten 48 Byte Payload INF.

Die VCI-Information dient zur Unterscheidung der verschiedenen logischen Kanäle auf einem Vermittlungsabschnitt, die VPI-Information betrifft Kanalbündel, die jeweils aus mehreren virtuellen Kanälen bestehen, wobei Zellen innerhalb eines Bündels von einem Koppelnetz in einer Vermittlung rasch verarbeitet werden können. Die PT-Information identifiziert die Art des Pay Load Feldes, wobei in einer Vermittlungsstelle außer dem Kopffeld auch das Informationsfeld der Zelle ausgewertet werden muß, jedoch darin enthaltene Nutzdaten in einer Vermittlung übergangen werden.

Die Header Error Control HEC ist nichts anderes als eine Prüfsumme, die Fehler im Kopf der Zelle feststellt, die z.B. durch Übertragungsfehler hervorgerufen werden. Mit der Information CLP werden ATM-Zellen bezeichnet, die von geringerer Bedeutung sind und gegebenenfalls bei Pufferüberläufen verworfen werden können.

Bei der Vermittlung von ATM-Zellen werden sogenannte Routingtabellen verwendet, wobei die Steuerung einer Vermittlung aus den einlangenden Zelle die Informationen VCI und VPI gewinnt, mit Hilfe der Routingtabellen jeweils die Informationen VPI, VCI für den folgenden Verbindungsabschnitt festgestellt und in den Zellkopf eingetragen werden, und die Zelle zum Ausgang der Vermittlung weitergeleitet wird.

Auch für die ATM-Technik wurde ein Schichtenmodell angegeben, wobei zwischen der Physical Layer, der eigentlichen ATM Layer, der ATM Adaption Layer AAL und höheren Schichten (Higher Layer Protocols) unterschieden wird. Dieses Schichtenmodell ist beispielsweise dargestellt in ATM, Solutions for Enterprise Internetworking", David Ginsburg, Addison-Wesley 1996, ISBN 0-201-87701-5, wobei in Kapitel 2.2.2 auch auf die entsprechenden Recommendations von ITU verwiesen wird.

Neben den genannten vier Schichten, von welchen im Rahmen der Erfindung vor allem die AAL-Schicht von Interesse ist, wird auch noch zwischen drei unterschiedlichen Ebenen, nämlich der Benutzerebene, der Steuerungsebene und der Verwaltungsebene unterschieden.

Die AAL-Schicht paßt die übergeordneten Ebenen (Higher Layers) an die ATM-Schicht an und führt sendeseitig die Unterteilung der Datenströme in Zellen und empfangsseitig die Zusammensetzung zu Nachrichten durch. Auch werden unterschiedliche Laufzeiten durch die AAL-Schicht ausgeglichen.

Man hat die Protokolle der AAL-Schicht zur Vereinheitlichung in verschiedene Klassen unterteilt, und diesbezüglich kann auf das Kapitel 3.1.4 Adaption" in dem vorhergehenden Werk von Ginsburg verwiesen werden, oder auf Mobilfunknetze und Ihre Protokolle", Band 2, B. Walke, Täubner Stuttgart 1998, ISBN 3-519-06431-6, Kapitel 8.2.5 ATM-Dienstklassen". Es ist aber anzumerken, daß es außer den ursprünglich durch ITUspezifizierten vier Dienstgruppen auch noch eine AAL5-Gruppe gibt, die zunächst seitens der Industrie für den Datentransport optimisiert wurde, und mittlerweile auch in dem ITU-Standardisierungsprozeß läuft (vgl. Ginsburg, p. 83).

Im Rahmen der Erfindung interessiert vor allem die Klasse 2, für welche es das AAL2-Protokoll gibt, z.B. für Echtzeitdienste mit variabler und geringer Bitrate. Dabei ist für AAL2 der in sich zweischichtige Aufbau eigentümlich, der sowohl die ATM-Schicht als auch die AAL2-Schicht besitzt. Dementsprechend muß in einem Vermittlungsknoten eine Zwei-Ebenen-Vermittlung erfolgen, nämlich eine ATM-Vermittlung und eine AAL2-Vermittlung.

Eine der Erfindung zugrunde liegende Aufgabe besteht in der Schaffung einer Vermittlungseinrichtung, welche trotz der äußerst komplexen Zwei-Ebenen-Vermittlung mit vertretbarem Aufwand realisierbar ist.

Diese Aufgabe wird mit einer Vermittlungseinrichtung der eingangs genannten Art gelöst, bei welcher erfindungsgemäß zumindest eine Server-Vermittlungseinheit vorgesehen ist, welche einen AAL2-Vermittler enthält, der über eine Schnittstelle und eine Eingangs-Verarbeitungseinheit sowie eine Ausgangs-Verarbeitungseinheit an das Koppelnetz angeschlossen ist, der AAL2-Vermittler zur gleichzeitigen Verarbeitung einer Maximalanzahl eingehender Verbindungen eingerichtet ist, für jede dieser Verbindungen eine AAL2-Routing-Liste vorgesehen ist und der Mikroprozessor dazu eingerichtet ist, den zulässigen Wertebereich für VPI/VCI Werte im Header der ATM-Zellen entsprechend der Anzahl der AAL2-Routing-Listen einzuschränken, sodaß auf der Schnittstelle nur die entsprechenden VPI/VCI-Codierungsbits zu berücksichtigen sind.

Dank der Erfindung kann ein AAL2-Vermittler an das ATM-Koppelnetz angeschlossen werden, ohne daß in dem AAL2-Vermittler eine Erkennung sämtlicher VPI/VCI-Möglichkeiten erforderlich ist. Dadurch kann viel Speicherplatz gespart und die Rechenkapazität bescheiden gehalten werden.

Bei einer zweckmäßigen Variante der Erfindung ist die Schnittstelle eine UTOPIA-Schnittstelle. Diese standardisierte Schnittstelle hat sich für den Anschluß von AAL2-Vermittlern an das ATM-Koppelnetz gut bewährt.

Im Sinne einer Verringerung des Aufwandes kann es auch zweckmäßig sein, wenn zwischen dem Koppelnetz und der zumindest einen Server-Vermittlungseinheit lediglich ein einziger virtueller Pfad eingerichtet ist.

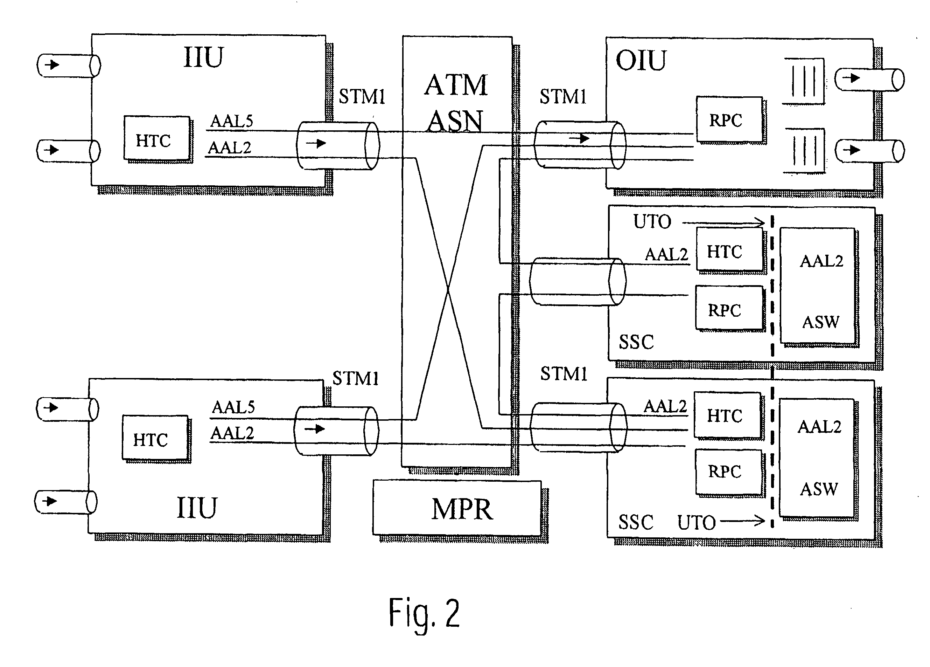

Die Erfindung samt weiterer Vorteile ist im folgenden unter Bezugnahme auf die Zeichnung näher erläutert, in welcher zeigen
■ Fig. 1 den Aufbau einer standardisierten ATM-Zelle und eine Bezugnahme auf im Rahmen der Erfindung unterdrückte Informationen,
■ Fig. 2 ein Blockschaltbild einer ATM-Vermittlungseinrichtung nach der Erfindung mit zwei an ein Koppelnetz angeschlossenen Server-Vermittlungseinheiten, und
■ Fig. 3 einen AAL2-Vermittler einer Server-Vermittlungseinheit in schematischer und symbolischer Darstellung.

In Fig. 2 ist ein ATM-Koppelnetz ASN gezeigt, an welches links zwei Eingangs-Schnittstelleneinheiten IIU, rechts oben eine Ausgangs-Schnittstelleneinheit OIU und darunter zwei Server-Vermittlungseinheiten SSC angeschlossen sind. Die Server-Vermittlungseinheiten SSC enthalten je einen als ASIC realisierten AAL2-Vermittler ASW mit je einer davorgelegenen Eingangs-Verarbeitungseinheit HTC bzw. einer Ausgangs-Verarbeitungseinheit RPC. Die Anbindung der Server-Vermittlungseinheiten SSC an das Koppelnetz ASN erfolgt über je eine, symbolisch eingezeichnete UTOPIA-Schnittstelle UTO. Die Eingangs-Schnittstelleneinheiten IIU besitzen je eine Eingangs-Verarbeitungseinheit HTC, und die Ausgangs-Schnittstelleneinheit besitzt eine Ausgangs-Verarbeitungseinheit RPC.

Wie Fig. 2 zu entnehmen ist, werden einlangende ATM-Verbindungen, die AAL 5 - Verbindungen enthalten, direkt über das Koppelnetz ASN zu der Ausgangs-Schnittstelleneinheit OIU geschaltet, ATM-Verbindungen, die AAL2-Verbindungen enthalten, laufen hingegen über die beiden Server-Vermittlungseinheiten SSC zu der Ausgangs-Schnittstelleneinheit. Zur Vereinfachung ist im gezeigten Beispiel angenommen, daß zwischen dem Koppelnetz ASN und jeder Server-Vermittlungseinheit SSC lediglich je ein einziger virtueller Pfad eingerichtet ist. Die Steuerung der Vermittlungseinrichtung erfolgt über einen Mikroprozessor MPR, der natürlich nicht notwendigerweise zentralisiert sein muß, wie in Fig. 2 gezeigt.

Auf der Server-Vermittlungseinheit SSC wird der vom Koppelnetz ASN einlangende Zellstrom zunächst in der Ausgangs-Verarbeitungseineit RPC behandelt, sodaß bereits beim Verbindungsaufbau der Mikroprozessor MPR die Verbindungsinformation der Server-Vermittlungseinheit SSC mitgeteilt hat. Nach der Ausgangsverarbeitung werden die ATM-Zellen in ihrem externen Format, d.h. im Standardformat an den AAL2-Vermittler ASW übergeben, der ein Demultiplexing durchführt, bei welchem die AAL2 Pakete aus den ATM-Zellen extrahiert werden, sodaß AAL2-Verbindungen eindeutig festgestellt werden können.

In jeder VCI/VPI-Verbindung können gemäß dem Standard bis zu 248 AAL2-Verbindungen geführt werden. Alle diese Verbindungen müssen für jede ATM-Verbindung vollständig aufgelistet sein, was in Routing-Listen (RL1 ... RLm) erfolgt und wozu auf Fig. 3 Bezug genommen wird. Für jede ATM-Verbindung von 1 bis m, die in einem AAL2-Vermittler SSC endet, wird daher eine Routing-Liste mit 248 Einträgen benötigt.

Wenn man nun sämtliche VCI/VPI-Informationen in der ATM-Zelle auswertet, müssen ebensoviele Routing-Listen verfügbar sein und erkannt werden können, wie es VCI/VPI-Kombinationen geben kann, und dies sind 2²⁸ dem ATM-Standard entsprechend. Da nun in jedem AAL2-Vermittler aus Kapazitätsgründen bloß einige Hundert ATM-Verbindungen terminieren, sieht die Erfindung vor, daß man sich auf weniger VPI/VCI-Werte einschränkt, da sich dann der Aufwand für das Durchsuchen der Routinglisten RL1 ...RLm reduzieren läßt.

Prinzipiell wird bei der Übertragung der ATM-Zellen über die UTOPIA-Schnittstellen das externe, standardisierte ATM-Format verwendet. Da gemäß der Erfindung die Service-Vermittlungseinheit SSC bzw. der AAL2-Vermittler ASW jedoch eine für sich abgeschlossene Einheit bildet, die lediglich zur Vermittlung dient, sieht sie vor, nicht den kompletten Standard für das ATM-Zellenformat mit allen Bereichen zu unterstützen. Bei Aufbau einer ATM-Verbindung über die UTOPIA-Schnittstelle wird daher der Mikroprozessor nur VPI/VCI-Werte aus einem vorher vereinbarten, eingeschränkten Vorrat vorgeben.

Wenn beispielsweise ein Baustein SSC 512 ATM-Verbindungen gleichzeitig bearbeiten kann, müssen nur 512 Verbindungen auf der Utopia-Schnittstelle unterschieden werden können. 512 Verbindungen können durch 9 Bits unterschieden werden, sodaß dann dafür nur 9 Bit in dem Header benötigt werden. Ein solches Entfernen bzw. Unterdrücken von Bits in der Zellstruktur ist natürlich auf einem externen Interface nicht erlaubt, im vorliegenden Fall jedoch kein Problem, da sich die UTOPIA-Schnittstelle innerhalb des Systems der Service-Vermittlungseinheit SSC befindet.

Nun wird wieder auf Fig. 1 verwiesen, wo man erkennt, daß eine Anzahl der VPI bzw. VCI-Bits in dem Header der ATM-Zelle schattiert eingezeichnet sind, im vorliegenden Beispiel die letzten vier Bits der ersten Zeile, die komplette zweite Zeile und die ersten vier Bits der vierten Zeile. Diese Bits werden unterdrückt, oder mit anderen Worten, es müssen nur zwölf VPI bzw. VCI-Bits ausgewertet werden. Somit ist der Mikroprozessor dazu eingerichtet, nur jene VPI/VCI Kombinationen auf der UTOPIA-Schnittstelle zu vergeben, die sich gemäß Fig. 1 nur in den nicht schattiert gezeichneten Bits im Header unterscheiden. Der Mikroprozessor MPR wird somit je nach Anzahl der Verbindungen, die eine Server-Vermittlungseinheit SSC gleichzeitig bearbeiten kann, programmiert.

Bei der Darstellung nach Fig. 3 wird von m eingehenden ATM Virtual Channel Verbindungen ausgegangen, welche AAL2-Verbindungen enthalten. Dementsprechend sind m Routinglisten RL1 ... RLm vorgesehen. Die Zahl der (rechts) abgehenden Virtual Channel Verbindungen mit AAL2-Verbindungen sei n. Aus der Nutzlast einer (links unten) einlangenden, mit ATM bezeichneten ATM-Zelle werden mit Hilfe der symbolisch dargestellten Funktionalität FUN des ASICs der Server-Vermittlungseinheit SSC AAL2-Pakete ausgepackt. Oberhalb der ATM-Zelle sind vier solche AAL2-Pakete dargestellt, wobei die AAL2-Pakete nicht genau in die ATM-Zelle (deren Nutzlast) passen müssen, was durch ein Überstehen links und rechts angedeutet ist.

Im vorliegenden Fall gibt es einen vorangegangenen Teil des rechten AAL2-Paketes, bestehend aus einem Header und einem Teil der AAL2-Payload, der bereits in einer vorher eingelangten ATM-Zelle der selben Verbindung enthalten war, mit VOR bezeichnet ist und in einem Zwischenspeicher ZSP, angedeutet rechts oben in der Routingliste RL1 enthalten war. Dieser Beginn des rechten AAL2-Paketes wird aus dem Zwischenspeicher geholt, und mit Hilfe der Funktionalität FUN wird der rudimentäre Payload-Teil des in der ATM-Zelle enthalten gewesenen AAL2-Paketes vervollständigt. Der von der Funktionalität FUN nach oben und dann nach rechts gehende Pfeil deutet an, daß die AAL2-Pakete sodann zu dem Multiplexing-Teil nach rechts übertragen werden. In einer ATM-Zelle können mehrere AAL2-Pakete enthalten sein, sodaß die symbolische Darstellung nur als Beispiel aufgefaßt werden soll. Es könnten theoretisch auch zwölf AAL2-Pakete in einer ATM-Payload enthalten gewesen sein.

In Fig. 3 verweist ein Pfeil PF1 von dem ersten Byte der ATM-Zellen-Payload zu dem Beginn des ersten AAL2-Headers. Dieser Pointer ist wichtig, um bei Zellverlust wieder aufsynchronisieren zu können. Der von dem Header der ATM-Zelle weggehende Pfeil PF2 zeigt zu der VCI-Verbindung in der Routingliste, hier der Nummer 3241. Der mit PF3 bezeichnete Pfeil aus dem Header des mittleren AAL2-Paketes deutet an, daß ein Byte aus dem Header die Länge der Payload des AAL2-Paketes angibt. Der Pfeil PF4 aus dem Header des mittleren AAL2-Paketes, der zur Zahl 9 in der Routingliste 1 zeigt, sagt, zu welcher der 248 AAL2-Verbindungen dieses Paket gehört. Analog zeigt der Pfeil PF5 zu einem abgehenden AAL2-Paket und deutet an, daß der neue Connection Identifier CID, hier 174", bei dem Transfer, den die Funktionalität ausführt, wieder an die gleiche Stelle geschrieben wird. Der Pfeil PF6 weist die neue Virtual Channel Connection VCC mit der Nummer 17 aus. Das weiter oben genannte eine Byte in der ATM-Payload ist ein Pointer auf den ersten in der ATM-Payload vorkommenden AAL2-Header, das ist hier der Header, von welchem die Pfeile PF3 und PF4 ausgehen.

## Patentansprüche

1. ATM-Vermittlungseinrichtung mit einem Koppelnetz (ASN), einer eine Eingangs-Verarbeitungseinheit (HTC) enthaltende Eingangsschnittstelleneinheit (IIU), zumindest einer eine Ausgangs-Schnittstelleneinheit enthaltende Ausgangs-Schnittstelleneinheit (OIU) und mit einem Mikroprozessor (MPR), wobei die Vermittlungseinrichtung dazu eingerichtet ist, in die Zellen der einlangenden Datenströme unter Benutzung von Routingtabellen eine neue VPI/VCI-Information für den weiteren Verbindungsabschnitt einzuschreiben,
**dadurch gekennzeichnet,**
**daß** zumindest eine Server-Vermittlungseinheit (SSC) vorgesehen ist, welche einen AAL2-Vermittler (ASW) enthält, der über eine Schnittstelle (UTO) und eine Eingangs-Verarbeitungseinheit (HTC) sowie eine Ausgangs-Verarbeitungseinheit (RPC) an das Koppelnetz (ASN) angeschlossen ist,
der AAL2-Vermittler (ASW) zur gleichzeitigen Verarbeitung einer Maximalanzahl (m) eingehender Verbindungen eingerichtet ist, für jede dieser Verbindungen eine AAL2-Routing-Liste (RL1 ... RLm) vorgesehen ist und der Mikroprozessor (MPR) dazu eingerichtet ist, den zulässigen Wertebereich für VPI/VCI Werte im Header der ATM-Zellen entsprechend der Anzahl der AAL2-Routing-Listen einzuschränken, sodaß auf der Schnittstelle nur die entsprechenden VPI/VCI-Codierungsbits zu berücksichtigen sind.

2. ATM-Vermittlungseinrichtung, nach Anspruch 1,
**dadurch gekennzeichnet,**
**daß** die Schnittstelle eine UTOPIA-Schnittstelle (UTO) ist.

3. ATM-Vermittlungseinrichtung, nach Anspruch 1 oder 2,
**dadurch gekennzeichnet,**
**daß** zwischen dem Koppelnetz (ASN) und der zumindest einen Server-Vermittlungseinheit (SSC) lediglich ein einziger virtueller Pfad eingerichtet ist.

4. ATM-Vermittlungseinrichtung nach einem der Ansprüche 1 bis 3,
**dadurch gekennzeichnet,**
**daß** den Routing-Listen (RL1 ... RLm) Zwischenspeicher (ZSP) zugeordnet sind, in welche ein Abschnitt eines AAL2-Paketes einer ATM-Zelle eingeschrieben und bei Verarbeitung der nachfolgenden ATM-Zelle und zur Vervollständigung des Restes dieses AALZ-Paketes wieder ausgelesen werden kann.

## Claims

1. An ATM switching device with a switching network (ASN), an input interface unit (IIU) containing an input processing unit (HTC), at least one output interface unit (OIU) containing an output interface unit and with a microprocessor (MPR), the switching device being set to write, using routing tables, new VPI/VCI information into the cells of incoming data streams for the onward connection section,
**characterised in that**
there is provided at least one server switching unit (SSC) containing an AAL2 switch (ASW) which is connected via an interface (UTO) and an input processing unit (HTC) as well as an output processing unit (RPC) to the switching network (ASN),
the AAL2 switch (ASW) is set for the simultaneous processing of a maximum number (m) of incoming connections, an AAL2 routing list (RL1 ... RLm) is provided for each of these connections and the microprocessor (MPR) is set up to restrict the permissible value range for VPI/VCI values in the header of the ATM cells in accordance with the number of AAL2 routing lists so that on the interface only the corresponding VPI/VCI coding bits have to be taken into consideration.

2. An ATM switching device according to Claim 1,
**characterised in that**
the interface is a UTOPIA interface (UTO).

3. An ATM switching device according to Claim 1 or Claim 2,
**characterised in that**
only a single virtual path is configured between the switching network (ASN) and the at least one server switching unit (SSC).

4. An ATM switching device according to any one of Claims 1 to 3,
**characterised in that**
buffer memories (ZSP) are assigned to the routing lists (RL1 ... RLm), to which buffer memories a section of an AAL2 packet of an ATM cell can be written and, upon processing of the subsequent ATM cell and in order to complete the remainder of this AAL2 packet, can be read out again.

## Revendications

1. Dispositif de commutation ATM avec un réseau de couplage (ASN), une unité d'interface d'entrée (IIU) incorporant une unité de traitement d'entrée (HTC), au moins une unité d'interface de sortie (OIU) incorporant une unité d'interface de sortie et avec un microprocesseur (MPR), le dispositif de commutation étant configuré pour enregistrer dans les cellules des flux de données entrants, à l'aide de tables de routage, une nouvelle information VPI/VCI pour la portion de connexion suivante,
**caractérisé en ce que**
au moins une unité de commutation de serveur (SSC) est prévue, laquelle incorpore un commutateur AAL2 (ASW) qui est raccordé au réseau de couplage (ASN) par l'intermédiaire d'une interface (UTO) et d'une unité de traitement d'entrée (HTC) ainsi que d'une unité de traitement de sortie (RPC),
**en ce que** le commutateur AAL2 (ASW) est configuré pour traiter simultanément un nombre maximum (m) de connexions entrantes, **en ce que** pour chacune de ces connexions une liste de routage AAL2 (RL1 ... RLm) est prévue et **en ce que** le microprocesseur (MPR) est configuré pour limiter la gamme de valeurs pour des valeurs AVP/VCI dans l'en-tête des cellules ATM selon le nombre de listes de routage AAL2 de manière à n'avoir à prendre en compte sur l'interface que les bits de codage VPI/VCI correspondants.

2. Dispositif de commutation ATM selon la revendication 1,
**caractérisé en ce que**
l'interface est une interface UTOPIA (UTO).

3. Dispositif de commutation ATM selon la revendication 1 ou 2,
**caractérisé en ce que**
entre le réseau de couplage (ASN) et ladite au moins une unité de commutation de serveur (SSC), il n'est établi qu'une seule voie virtuelle.

4. Dispositif de commutation ATM selon l'une des revendications 1 à 3,
**caractérisé en ce que**
aux listes de routage (RL1 ... RLm) sont affectées des mémoires intermédiaires (ZSP) permettant d'y enregistrer une portion d'un paquet AAL2 d'une cellule ATM et lors du traitement de la cellule ATM suivante et pour compléter le reste de ce paquet AAL2, de l'en extraire.
